# EUROPÄISCHE PATENTSCHRIFT

(11) **EP 3 337 008 B1**
(45) Veröffentlichungstag und Bekanntmachung des Hinweises auf die Patenterteilung: **27.10.2021**
(21) Anmeldenummer: 17206025.3
(22) Anmeldetag: 07.12.2017
(51) Int. Cl.: H02J 9/06, E05F 15/60

(54) **ENERGIEVERSORGUNG FÜR EINE TÜRANLAGE UND KORRESPONDIERENDE TÜRANLAGE**
POWER SUPPLY FOR A DOOR ASSEMBLY AND CORRESPONDING DOOR ASSEMBLY
ALIMENTATION EN ÉNERGIE POUR UNE INSTALLATION DE PORTE ET INSTALLATION DE PORTE CORRESPONDANTE

(30) Priorität: 16.12.2016 DE 102016225318
(43) Veröffentlichungstag der Anmeldung: 20.06.2018
(73) Patentinhaber: GEZE GmbH, 71229 Leonberg (DE)
(72) Erfinder: Benchokroun, Adnane, 75179 Pforzheim (DE); Großmann, Thilo, 75382 Althengstett (DE); Sitanggang, Surya Dampi, 71229 Leonberg (DE)

(56) Entgegenhaltungen:
- EP-A2- 1 739 807
- DE-A1- 10 057 113
- DE-A1-102004 060 282
- DE-A1-102011 004 019

## Beschreibung

Die Erfindung betrifft eine Energieversorgung für eine Türanlage der im Oberbegriff des Patentanspruchs 1 genannten Art sowie eine korrespondierende Türanlage mit einer solchen Energieversorgung.

Aus dem Stand der Technik sind Türanlagen mit mindestens einem Flügel und mindestens einer elektrischen Komponente bekannt, welche eine automatische Entriegelung und eine automatische Verrieglung des mindestens einen Flügels ermöglicht. Die mindestens eine elektrische Komponente wird über eine Energieversorgung, welche eine Türsteuerelektronik, eine Spannungsquelle und eine Notstromversorgung umfasst, mit einer elektrischen Spannung versorgt. Im Normalbetrieb versorgt die Spannungsquelle die mindestens eine elektrische Komponente mit einer elektrischen Spannung. Bei Ausfall der Spannungsquelle oder bei einem Kabelbruch versorgt mindestens ein elektrischer Energiespeicher der Notstromversorgung in einem Notbetrieb die mindestens eine elektrische Komponente mit der elektrischen Spannung. Bei einer zweiflügeligen Türanlage mit einem Gangflügel und einem Standflügel werden mehrere elektrische Komponenten der Türanlage von der Energieversorgung versorgt, um sowohl den Gangflügel als auch den Standflügel automatisch entriegeln und verriegeln zu können. Die Energiespeicher der Notstromversorgung sind vorzugsweise als so genannte Superkondensatoren ausgeführt, welche eine hohe Energiedichte aufweisen und schnell geladen werden können.

Aus der EP 2 837 757 A2 ist beispielsweise eine Vorrichtung für eine Tür zur elektrischen Versorgung einer elektrischen Komponente bekannt. Die elektrische Komponente kann im Normalbetrieb durch eine Spannungsquelle zum Entriegeln und zum Verriegeln der Tür elektrisch betrieben werden. Ein als elektrostatischer Energiespeicher ausgeführter Energiespeicher kann durch eine an der Spannungsquelle abgreifbare elektrische Spannung geladen werden und weist mindestens eine Energiedichte von 1J/cm³ auf. Bei einem Ausfall der elektrischen Spannung kann die elektrische Komponente im Notbetrieb durch den Energiespeicher betrieben werden. Der Energiespeicher kann beispielsweise in einem Türblatt oder im Schlossgehäuse angeordnet werden.

In der DE 10 2011 004 019 A1 wir eine Tür mit einem elektrischen Antriebssystem sowie einer Stromversorgungseinrichtung offenbart. Das Antriebssystem umfasst einen Elektromotor, ein Netzteil, ein Türsteuergerät und einen Energiespeicher, der über das Türsteuergerät von dem Elektromotor ladbar ist.

Der Erfindung liegt die Aufgabe zugrunde, eine Energieversorgung für eine Türanlage und eine korrespondierende Türanlage mit einer Notstromversorgung anzugeben, welche einfach eingebaut bzw. nachgerüstet werden kann.

Diese Aufgabe wird durch die Merkmale der Energieversorgung für eine Türanlage nach Patentanspruch 1 und durch die Merkmale der Türanlage nach Patentanspruch 10 gelöst.

Vorteilhafte Ausgestaltungen und Weiterbildungen der Erfindung sind in den übrigen Ansprüchen angegeben.

Um einen einfachen Einbau und Nachrüstung einer Notstromversorgung anzugeben, ist die Notstromversorgung modular aufgebaut und umfasst mindestens eine eigenständige Notstromeinheit, welche auf einer Leiterplatte mindestens einen Energiespeicher und eine Auswerte- und Steuerschaltung aufweist und in einen Strompfad zwischen einer Spannungsquelle und mindestens einer elektrischen Komponente der Türanlage eingeschleift ist. Hierbei ermittelt eine Türsteuerelektronik über eine Kommunikation mit der mindestens einen Notstromeinheit Anzahl und Ladezustand der elektrischen Energiespeicher der Notstromversorgung. Die Spannungsquelle versorgt im Normalbetrieb die mindestens eine elektrische Komponente der Türanlage mit einer elektrischen Spannung. In einem Notbetrieb versorgt die Notstromversorgung über den mindestens einen elektrischen Energiespeicher die mindestens eine elektrische Komponente der Türanlage mit der elektrischen Spannung.

Zudem wird eine Türanlage mit mindestens einem Flügel, mindestens einer elektrischen Komponente, welche eine Entriegelung und eine Verrieglung des mindestens einen Flügels ermöglicht, und einer solchen Energieversorgung vorgeschlagen, welche eine Türsteuerelektronik, eine Spannungsquelle, welche im Normalbetrieb die mindestens eine elektrische Komponente mit einer elektrischen Spannung versorgt, und eine Notstromversorgung aufweist, welche mindestens einen elektrischen Energiespeicher umfasst und im Notbetrieb die mindestens eine elektrische Komponente mit der elektrischen Spannung versorgt.

Die modulare Ausführung der Notstromversorgung mit eigenständigen Notstromeinheiten, welche jeweils eine Leiterplatte mit mindestens einem Energiespeicher und einer Auswerte- und Steuerschaltung aufweisen, ermöglicht einen nachträglichen Einbau in bestehende Türanlagen. So können die einzelnen Notstromeinheiten entsprechende Steck- und/oder Drahtverbindungen in den Strompfad zwischen der Spannungsquelle und der elektrischen Komponenten eingeschleift werden. Vorzugsweise kann die Leiterplatte mit dem mindestens einen Energiespeicher und der Auswerte- und Steuerschaltung in einem gemeinsamen Gehäuse eingebaut werden. Die Notstromeinheit kann beispielsweise auf das Gehäuse des Türsteuergeräts aufgesteckt oder innerhalb des Gehäuses angeordnet werden. Zusätzlich oder alternativ können weitere Notstromeinheiten im Rahmen und/oder Blatt der korrespondierenden Türflügel angeordnet werden. Die Anzahl der Energiespeicher und die Anzahl der Notstromeinheiten sind insbesondere von der Anzahl der im Notbetrieb zu versorgenden elektrischen Komponenten abhängig. Der Einbau im Türflügel hat den Vorteil, dass die Notstromversorgung von im Türflügel angeordneten elektrischen Komponenten auch bei einer Beschädigung der Zuleitungen zum Türflügel möglich ist, und je nach Einsatz eine Entriegelung oder Verriegelung des Türflügels im Notbetrieb durchgeführt werden kann. Dadurch können Brandschutztüren bei einer Unterbrechung der Stromversorgung in vorteilhafter Weise sicher verriegelt werden, und Fluchttüren können bei einer Unterbrechung der Stromversorgung in vorteilhafter Weise sicher entriegelt werden. Der Einbau in das Türsteuergerät, hat den Vorteil, dass kein weiterer Bauraum im Türflügel erforderlich ist und die Leiterplatte vor Erschütterungen geschützt ist.

Die Spannungsquelle ist beispielsweise als Netzteil und Teil des Türsteuergeräts ausgeführt. Das Netzteil erzeugt aus einer Netzspannung die für den Betrieb der elektrischen Komponenten erforderliche Gleichspannung und stellt diese an seinen Ausgängen zur Verfügung. Zusätzlich ist die Türsteuerelektronik Teil des Türsteuergeräts und in einem gemeinsamen Gehäuse angeordnet.

Bei einer bevorzugten Ausführungsform der Energieversorgung kann die Leiterplatte einseitig bestückt und in einem Gehäuse angeordnet werden. Die einseitige Bestückung ermöglicht eine schmale Bauform der Notstromeinheit, die auch problemlos in das Blatt oder den Rahmen des korrespondierenden Türflügels integriert werden kann.

In vorteilhafter Ausgestaltung der Energieversorgung kann die Auswerte- und Steuerschaltung der jeweiligen Notstromeinheit zyklisch eine Leitungsüberwachung von ersten Verbindungsleitungen, welche die mindestens eine Notstromeinheit mit der Spannungsquelle verbinden, und von zweiten Verbindungsleitungen, welche die jeweilige Notstromeinheit mit der mindestens einen elektrischen Komponente verbinden, und einen Selbsttest mit einer Ladezustandsüberwachung des mindestens einen Energiespeichers durchführen. Zudem kann die Auswerte- und Steuerschaltung eine erkannte Störung an die übergeordnete Türsteuerelektronik ausgeben, wobei erkannte Störungen über mindestens eine optische Ausgabeeinheit angezeigt werden können. So können beispielsweise entsprechende Leuchtdioden an den Notstromeinheiten und/oder an der Türsteuerelektronik vorgesehen werden. Die Auswerte- und Steuerschaltung kann beispielsweise einen Notbetrieb auslösen, wenn die Leitungsüberwachung eine Unterbrechung des Strompfads zur Spannungsquelle anzeigt. Des Weiteren kann die Auswerte- und Steuerschaltung einen Ladevorgang ausführen, wenn der aktuelle Ladezustand des mindestens einen Energiespeichers einen vorgegebenen ersten Schwellwert aufweist oder unterschreitet. Die Auswerte- und Steuerschaltung kann den Ladevorgang beenden, wenn der aktuelle Ladezustand des mindestens einen Energiespeichers einen vorgegebenen zweiten Schwellwert erreicht oder überschreitet. In vorteilhafter Weise kann die Auswerte- und Steuerschaltung den Ladevorgang überwachen und den Ladestrom begrenzen, um eine Überlastung der Leitungen und des Energiespeichers zu verhindern. Die Auswerte- und Steuerschaltung kann den Ladevorgang auswerten und einen mangelhaften Energiespeicher erkennen, wenn der Ladezustand des korrespondierenden Energiespeichers nach Ablauf einer vorgegebenen Ladezeit den ersten Schwellwert nicht erreicht. Da die Auswerte- und Steuerschaltungen der einzelnen Notstromeinheiten mit der übergeordneten Türsteuerelektronik kommunizieren, kennt die Türsteuerelektronik die Anzahl und die Ladezustände der in der Türanlage verbauten Energiespeicher.

In weiterer vorteilhafter Ausgestaltung der Energieversorgung kann die elektrische Komponente ein Stangenantrieb für eine Verriegelungsstange eines Türflügels sein, welche einen Entriegelungs-oder Verriegelungsvorgang für den korrespondierenden Türflügel ausführen kann. Alternativ kann die elektrische Komponente eine Schlosselektronik für einen Schlossriegel sein, welche einen Entriegelungs-oder Verriegelungsvorgang für den korrespondierenden Türflügel ausführen kann. Der erste Schwellwert des Ladezustands des korrespondierenden Energiespeichers ist in vorteilhafter Weise so gewählt ist, dass die gespeicherte Energie einen vollständigen Entriegelungs- und Verriegelungsvorgang der Türanlage ermöglicht.

In vorteilhafter Ausgestaltung der Türanlage kann die mindestens eine Notstromeinheit im Rahmen oder Blatt des mindestens einen Flügels und/oder außerhalb des mindestens einen Flügels in einem Türsteuergerät integriert werden, welches die Türsteuerelektronik und das Spannungsquelle umfasst.

Nachfolgend werden Ausführungsbeispiele der Erfindung anhand von zeichnerischen Darstellungen näher erläutert. In den zeichnerischen Darstellungen bezeichnen gleiche Bezugszeichen Komponenten bzw. Elemente, die gleiche bzw. analoge Funktionen ausführen.

### Dabei zeigen:

- Fig. 1: eine schematische Darstellung eines Ausführungsbeispiels einer erfindungsgemäßen Türanlage mit einem Ausführungsbeispiel einer erfindungsgemäßen Energieversorgung für eine Türanlage,
- Fig. 2: ein schematisches Blockdiagramm der erfindungsgemäßen Energieversorgung für eine Türanlage aus Fig. 1,
- Fig. 3: eine schematische Darstellung eines Ausführungsbeispiels einer Notstromeinheit ohne Gehäuse für die erfindungsgemäße Energieversorgung für eine Türanlage aus Fig. 1 und 2, und
- Fig. 4: eine schematische perspektivische Darstellung der Notstromeinheit aus Fig. 1 mit Gehäuse.

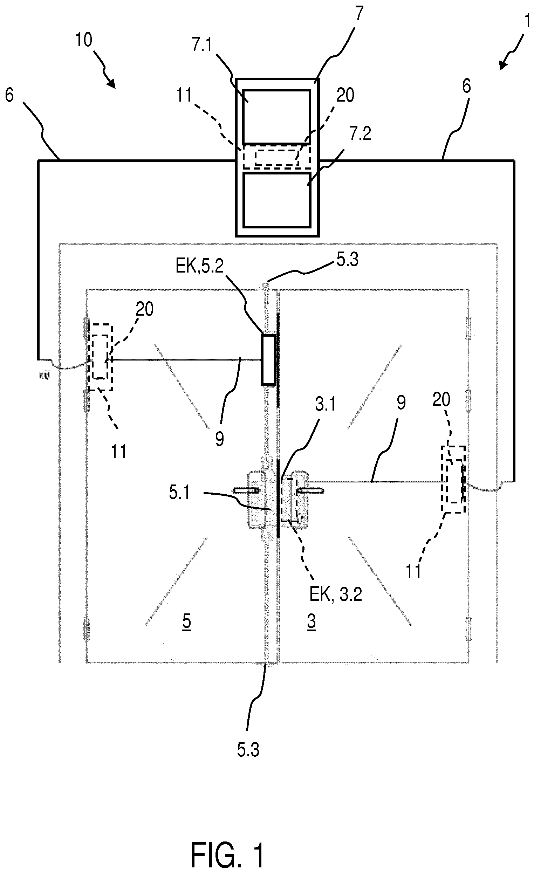

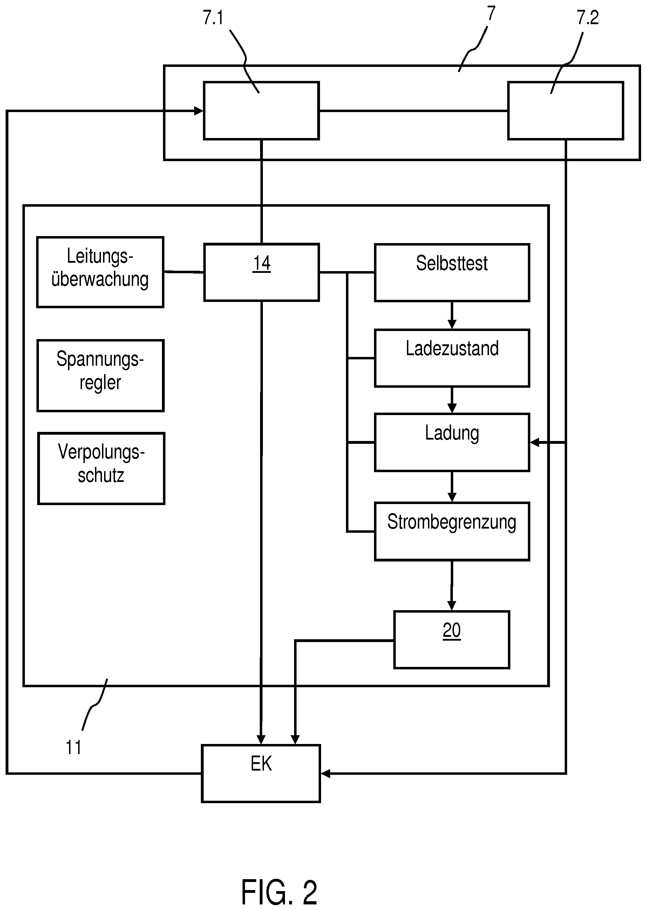

Wie aus Fig. 1 und 2 ersichtlich ist, umfasst die erfindungsgemäße Türanlage 1 im dargestellten Ausführungsbeispiel einen Gangflügel 3, einen Standflügel 5, mindestens eine elektrischen Komponente EK, welche eine Entriegelung und eine Verrieglung des Gangflügels 3 und/oder des Standflügels 5 ermöglicht, und eine Energieversorgung, welche eine Türsteuerelektronik 7.1, eine Spannungsquelle 7.2, welche im Normalbetrieb die mindestens eine elektrische Komponente EK mit einer elektrischen Spannung versorgt, und eine Notstromversorgung 10 aufweist, welche mindestens einen elektrischen Energiespeicher 20 umfasst und in einem Notbetrieb die mindestens eine elektrische Komponente EK mit der elektrischen Spannung versorgt.

Wie aus Fig. 1 bis 4 weiter ersichtlich ist, umfasst die Energieversorgung für eine Türanlage 1 im dargestellten Ausführungsbeispiel eine Türsteuerelektronik 7.1, eine Spannungsquelle 7.2, welche im Normalbetrieb die mindestens eine elektrische Komponente EK der Türanlage 1 mit einer elektrischen Spannung versorgt, und eine Notstromversorgung 10, welche mindestens einen elektrischen Energiespeicher 20 umfasst und in einem Notbetrieb die mindestens eine elektrische Komponente EK der Türanlage 1 mit der elektrischen Spannung versorgt.

Erfindungsgemäß ist die Notstromversorgung 10 modular aufgebaut und umfasst mindestens eine eigenständige Notstromeinheit 11, welche auf einer Leiterplatte 12 den mindestens einen Energiespeicher 20 und eine Auswerte- und Steuerschaltung 14 aufweist und in einen Strompfad zwischen der Spannungsquelle 7.2 und der mindestens einen elektrischen Komponente EK der Türanlage 1 eingeschleift ist. Hierbei ermittelt die Türsteuerelektronik 7.1 über eine Kommunikation mit der mindestens einen Notstromeinheit 11 Anzahl und Ladezustand der elektrischen Energiespeicher 20 der Notstromversorgung 10. In Fig. 1 sind die möglichen Positionen der Notstromeinheit 11 mit dem Energiespeicher 20 gestrichelt eingezeichnet.

Wie aus Fig. 1 weiter ersichtlich ist, kann die mindestens eine Notstromeinheit 11 im Rahmen oder Blatt des Gangflügels 3 und/oder des Standflügels 5 und/oder in einem Türsteuergerät 7 integriert werden, welches die Türsteuerelektronik 7.1 und die Spannungsquelle 7.2 umfasst. Im dargestellten Ausführungsbeispiel ist eine erste elektrische Komponente EK als Stangenantrieb 5.2 für eine Verriegelungsstange 5.3 des Standflügels 5 ausgeführt. Eine zweite elektrische Komponente EK ist als Schlosselektronik 3.2 für einen nicht näher dargestellten Schlossriegel ausgeführt. Hierbei ist die Schlosselektronik im Schlosskasten 3.2 des Gangflügels 3 angeordnet und bewegt während eines Verriegelungsvorgangs den Schlossriegel in eine nicht näher dargestellte Aussparung im Gegenkasten 5.1 des Standflügels 5. Während eines Entriegelungsvorgangs bewegt die Schlosselektronik 3.2 den Schlossriegel zurück in den Schlosskasten 3.1.

Im dargestellten Ausführungsbeispiel kann die Notstromversorgung 10 beispielsweise zwei Notstromeinheiten 11 aufweisen, von denen eine erste Notstromeinheit 11 im Gangflügel 3 und eine zweite Notstromeinheit 11 im Standflügel 5 angeordnet ist. Bei dieser Ausführungsform können die Notstromeinheiten 11 jeweils nur einen Energiespeicher 20 aufweisen. Hierbei ist die Ladekapazität des Energiespeichers 20 der ersten Notstromeinheit 11 so ausgelegt, dass die Schlosselektronik 3.2 im Notbetrieb mit Energie versorgt werden kann. Die Ladekapazität des Energiespeichers 20 der zweiten Notstromeinheit 11 ist so ausgelegt, dass der Stangenantrieb 5.2 im Notbetrieb mit Energie versorgt werden kann. Alternativ kann nur eine Notstromeinheit 11 im Türsteuergerät 7 vorgesehen werden, welche zwei Energiespeicher 10 aufweist. Hierbei versorgt ein erster Energiespeichers 20 die Schlosselektronik 3.2 im Notbetrieb mit Energie, und ein zweiter Energiespeichers 20 versorgt den Stangenantrieb 5.2 im Notbetrieb mit Energie. Selbstverständlich sind noch weitere Einbauvariationen der Notstromeinheiten 11 möglich.

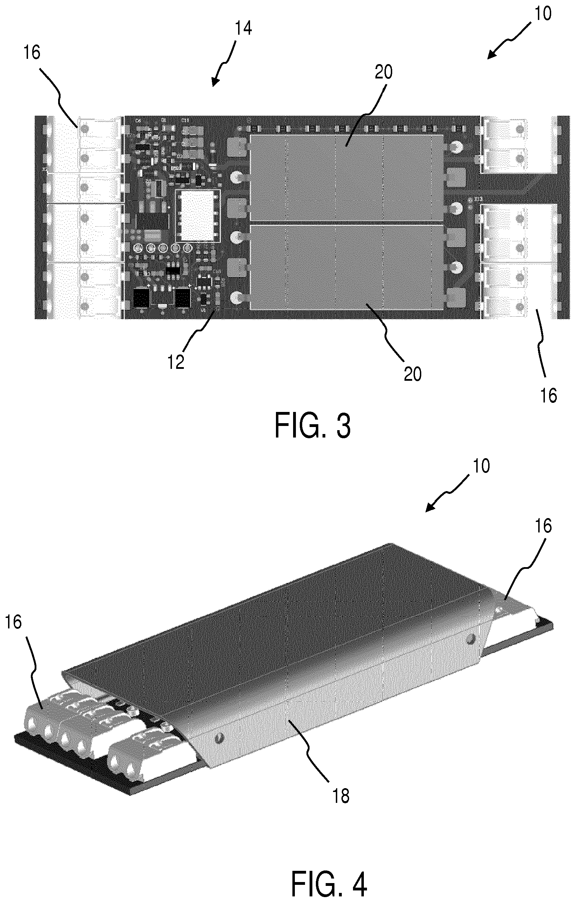

Wie aus Fig. 3 und 4 weiter ersichtlich ist, ist die Leiterplatte 12 im dargestellten Ausführungsbeispiel einseitig bestückt und in einem Gehäuse 18 angeordnet. Dies ermöglicht eine schmale Ausführungsform, welche problemlos in ein Blatt oder einen Rahmen des Gangflügels 3 oder des Standflügels 5 eingebaut werden kann. Hierbei schützt das Gehäuse 18 die Notstromeinheit 11 vor äußeren Einflüssen. Der mindestens eine Energiespeicher 20 ist im dargestellten Ausführungsbeispiel als Superkondensator mit einer hohen Ladungsdichte ausgeführt.

Wie aus Fig. 1 und 2 weiter ersichtlich ist, führt die Auswerte- und Steuerschaltung 14 der jeweiligen Notstromeinheit 11 zyklisch eine Leitungsüberwachung von ersten Verbindungsleitungen 6, welche die mindestens eine Notstromeinheit 11 mit der Spannungsquelle 7.2 verbinden, und von zweiten Verbindungsleitungen 9, welche die jeweilige Notstromeinheit 11 mit der mindestens einen elektrischen Komponente EK verbinden, und einen Selbsttest mit einer Ladzustandsüberwachung des mindestens einen Energiespeichers 20 durch. Die Auswerte- und Steuerschaltung 14 gibt eine erkannte Störung an die übergeordnete Türsteuerelektronik 7.1 aus. Erkannte Störungen können beispielsweise über mindestens eine optische Ausgabeeinheit angezeigt werden. So können beispielsweise verschieden farbige Leuchtdioden (LEDs) eingesetzt werden, um verschiedene Störungen oder einen fehlerfreien Betrieb anzuzeigen. Die Auswerte- und Steuerschaltung 14 umfasst beispielsweise einen Mikrocontroller, welcher beim Hochfahren die Funktionsfähigkeit und den Ladezustand der Energiespeicher 20 überprüft. Nach dem Laden der Energiespeicher 20 wird die Last bzw. die elektrischen Komponenten EK mit der vorgegebenen Spannung versorgt. Zudem überprüft der Mikrocontroller der Auswerte- und Steuerschaltung 14 zyklisch die Energiespeicher 20 auf Vorhandensein und auf den Ladezustand. Sollte eine Überprüfung eine Störung anzeigen, wird die Spannungsversorgung der Last bzw. der elektrischen Komponenten EK abgeschaltet und eine Störungsmeldung an die übergeordnete Türsteuerelektronik 7.1 ausgegeben. Diese Systemmeldungen erfolgen über die ersten Verbindungsleitungen 6, welche vorzugsweise Leitungen eines Datenbusses umfassen.

Zudem löst die Auswerte- und Steuerschaltung 14 einen Notbetrieb aus, wenn die Leitungsüberwachung eine Unterbrechung des Strompfads zur Spannungsquelle 7.2 bzw. zur Türsteuerelektronik 7.1 anzeigt. Die Auswerte- und Steuerschaltung 14 führt einen Ladevorgang aus, wenn der aktuelle Ladezustand des mindestens einen Energiespeichers 20 einen vorgegebenen ersten Schwellwert aufweist oder unterschreitet. Die Auswerte- und Steuerschaltung 14 beendet den Ladevorgang, wenn der aktuelle Ladezustand des mindestens einen Energiespeichers 20 einen vorgegebenen zweiten Schwellwert erreicht oder überschreitet. Die Auswerte- und Steuerschaltung 14 überwacht den Ladevorgang und begrenzt den Ladestrom. Des Weiteren wertet die Auswerte- und Steuerschaltung 14 den Ladevorgang aus und erkennt einen mangelhaften Energiespeicher 20, wenn der Ladezustand des korrespondierenden Energiespeichers 20 nach Ablauf einer vorgegebenen Ladezeit den ersten Schwellwert nicht erreicht. Der erste Schwellwert des Ladezustands des korrespondierenden Energiespeichers 20 ist so gewählt, dass die gespeicherte Energie einen vollständigen Entriegelungs- und Verriegelungsvorgang der Türanlage 1 ermöglicht.

Ausführungsformen der erfindungsgemäßen Energieversorgung für eine Türanlage ermöglichen in vorteilhafter Weise einen einfachen Einbau und Nachrüstung einer Notstromversorgung.

### Bezugszeichenliste

- 1: Türanlage
- 3: Gangflügel
- 3.1: Schlosskasten
- 3.2: Schlosselektronik
- 5: Standflügel
- 5.1: Gegenkasten
- 5.2: Stangenantrieb
- 5.3: Verriegelungsstange
- 6: Verbindungsleitung
- 7: Türsteuergerät
- 7.1: Spannungsquelle
- 7.2: Türsteuerelektronik
- 9: Verbindungsleitung
- 10: Notstromversorgung
- 11: Notstromeinheit
- 12: Leiterplatte
- 14: Auswerte- und Steuerschaltung
- 16: Kontakteinheit
- 18: Gehäuse
- 20: Energiespeicher
- EK: elektrische Komponente

## Patentansprüche

1. Energieversorgung für eine Türanlage (1), mit einer Türsteuerelektronik (7.1), einer Spannungsquelle (7.2), welche im Normalbetrieb mindestens eine elektrische Komponente (EK) der Türanlage (1) mit einer elektrischen Spannung versorgt, und einer Notstromversorgung (10), welche mindestens einen elektrischen Energiespeicher (20) umfasst und in einem Notbetrieb die mindestens eine elektrische Komponente (EK) der Türanlage (1) mit der elektrischen Spannung versorgt,
**dadurch gekennzeichnet,**
**dass** die Notstromversorgung (10) modular aufgebaut ist und mindestens eine eigenständige Notstromeinheit (11) umfasst, welche auf einer Leiterplatte (12) den mindestens einen Energiespeicher (20) und eine Auswerte- und Steuerschaltung (14) aufweist und in einen Strompfad zwischen der Spannungsquelle (7.2) und der mindestens einen elektrischen Komponente (EK) der Türanlage (1) eingeschleift ist, wobei die Türsteuerelektronik (7.1 ) über eine Kommunikation mit der mindestens einen Notstromeinheit (11) die Anzahl der elektrischen Energiespeicher (20) und den Ladezustand der elektrischen Energiespeicher (20) der Notstromversorgung (10) ermittelt.

2. Energieversorgung nach Anspruch 1,
**dadurch gekennzeichnet,**
**dass** die Leiterplatte (12) einseitig bestückt und in einem Gehäuse (18) angeordnet ist.

3. Energieversorgung nach Anspruch 1 oder 2,
**dadurch gekennzeichnet,**
**dass** die Auswerte- und Steuerschaltung (14) der jeweiligen Notstromeinheit (11) zyklisch eine Leitungsüberwachung von ersten Verbindungsleitungen (6), welche die mindestens eine Notstromeinheit (11) mit der Spannungsquelle (7.2) verbinden, und von zweiten Verbindungsleitungen (9), welche die jeweilige Notstromeinheit (11) mit der mindestens einen elektrischen Komponente (EK) verbinden, und einen Selbsttest mit einer Ladezustandsüberwachung des mindestens einen Energiespeichers (20) durchführt.

4. Energieversorgung nach Anspruch 3,
**dadurch gekennzeichnet,**
**dass** die Auswerte- und Steuerschaltung (14) eine erkannte Störung an die übergeordnete Türsteuerelektronik (7.1) ausgibt, wobei erkannte Störungen über mindestens eine optische Ausgabeeinheit anzeigbar sind.

5. Energieversorgung nach Anspruch 3 oder 4,
**dadurch gekennzeichnet,**
**dass** die Auswerte- und Steuerschaltung (14) einen Notbetrieb auslöst, wenn die Leitungsüberwachung eine Unterbrechung des Strompfads zur Spannungsquelle (7.2) anzeigt.

6. Energieversorgung nach einem der Ansprüche 3 bis 5,
**dadurch gekennzeichnet,**
**dass** die Auswerte- und Steuerschaltung (14) einen Ladevorgang ausführt, wenn der aktuelle Ladezustand des mindestens einen Energiespeichers (20) einen vorgegebenen ersten Schwellwert aufweist oder unterschreitet, und den Ladevorgang beendet, wenn der aktuelle Ladezustand des mindestens einen Energiespeichers (20) einen vorgegebenen zweiten Schwellwert erreicht oder überschreitet.

7. Energieversorgung nach Anspruch 6,
**dadurch gekennzeichnet,**
**dass** die Auswerte- und Steuerschaltung (14) den Ladevorgang überwacht und den Ladestrom begrenzt, wobei die Auswerte- und Steuerschaltung (14) den Ladevorgang auswertet und einen mangelhaften Energiespeicher (20) erkennt, wenn der Ladezustand des korrespondierenden Energiespeichers (20) nach Ablauf einer vorgegebenen Ladezeit den ersten Schwellwert nicht erreicht.

8. Energieversorgung nach einem der Ansprüche 1 bis 7,
**dadurch gekennzeichnet,**
**dass** die elektrische Komponente (EK) ein Stangenantrieb (5.2) für eine Verriegelungsstange (5.3) eines Türflügels (5) oder eine Schlosselektronik (3.2) für einen Schlossriegel ist, welche einen Entriegelungs- oder Verriegelungsvorgang ausführen.

9. Energieversorgung nach Anspruch 8,
**dadurch gekennzeichnet,**
**dass** der erste Schwellwert des Ladezustands des korrespondierenden Energiespeichers (20) so gewählt ist, dass die gespeicherte Energie einen vollständigen Entriegelungs- und Verriegelungsvorgang der Türanlage (1) ermöglicht.

10. Türanlage (1) mit einer Energieversorgung und mindestens einem Flügel (Gangflügel 3, Standflügel 5), mindestens einer elektrischen Komponente (EK), welche eine Entriegelung und eine Verrieglung des mindestens einen Flügels (Gangflügel 3, Standflügel 5) ermöglicht wobei die Energieversorgung eine Türsteuerelektronik (7.1), eine Spannungsquelle (7.2), welche im Normalbetrieb die mindestens eine elektrische Komponente (EK) mit einer elektrischen Spannung versorgt, und einer Notstromversorgung (10), welche mindestens einen elektrischen Energiespeicher (20) umfasst und in einem Notbetrieb die mindestens eine elektrische Komponente (EK) mit der elektrischen Spannung versorgt,
**dadurch gekennzeichnet,**
**dass** die Energieversorgung nach zumindest einem der Ansprüche 1 bis 9 ausgeführt ist.

11. Türanlage (1) nach Anspruch 1,
**dadurch gekennzeichnet,**
**dass** die mindestens eine Notstromeinheit (11) im Rahmen oder Blatt des mindestens einen Flügels (Gangflügel 3, Standflügel 5) und/oder außerhalb des mindestens einen Flügels (Gangflügel 3, Standflügel 5) in einem Türsteuergerät (7) integriert ist, welches die Türsteuerelektronik (7.1) und die Spannungsquelle (7.2) umfasst.

## Claims

1. Energy supply for a door system (1), having door control electronics (7.1), a voltage source (7.2) which, during normal operation, supplies at least one electrical component (EK) of the door system (1) with an electrical voltage, and an emergency power supply (10) which comprises at least one electrical energy store (20) and, during emergency operation, supplies the at least one electrical component (EK) of the door system (1) with the electrical voltage, **characterized**
**in that** the emergency power supply (10) has a modular structure and comprises at least one independent emergency power unit (11) which has the at least one energy store (20) and an evaluation and control circuit (14) on a printed circuit board (12) and is looped into a current path between the voltage source (7.2) and the at least one electrical component (EK) of the door system (1), wherein the door control electronics (7.1) determine the number of electrical energy stores (20) and the state of charge of the electrical energy stores (20) of the emergency power supply (10) by communicating with the at least one emergency power unit (11).

2. Energy supply according to Claim 1,
**characterized**
**in that** the printed circuit board (12) is populated on one side and is arranged in a housing (18).

3. Energy supply according to Claim 1 or 2, **characterized**
**in that** the evaluation and control circuit (14) of the respective emergency power unit (11) cyclically monitors first connecting lines (6), which connect the at least one emergency power unit (11) to the voltage source (7.2), and second connecting lines (9), which connect the respective emergency power unit (11) to the at least one electrical component (EK), and carries out a self-test with monitoring of the state of charge of the at least one energy store (20).

4. Energy supply according to Claim 3, **characterized**
**in that** the evaluation and control circuit (14) outputs an identified fault to the superordinate door control electronics (7.1), wherein identified faults can be displayed using at least one optical output unit.

5. Energy supply according to Claim 3 or 4, **characterized**
**in that** the evaluation and control circuit (14) triggers emergency operation if the line monitoring indicates an interruption in the current path to the voltage source (7.2).

6. Energy supply according to one of Claims 3 to 5, **characterized**
**in that** the evaluation and control circuit (14) carries out a charging operation if the current state of charge of the at least one energy store (20) has or falls below a predefined first threshold value, and terminates the charging operation if the current state of charge of the at least one energy store (20) reaches or exceeds a predefined second threshold value.

7. Energy supply according to Claim 6,
**characterized**
**in that** the evaluation and control circuit (14) monitors the charging operation and limits the charging current, wherein the evaluation and control circuit (14) evaluates the charging operation and identifies a defective energy store (20) if the state of charge of the corresponding energy store (20) does not reach the first threshold value after the expiry of a predefined charging time.

8. Energy supply according to one of Claims 1 to 7, **characterized**
**in that** the electrical component (EK) is a rod drive (5.2) for a locking rod (5.3) of a door leaf (5) or lock electronics (3.2) for a lock bolt, which carry out an unlocking or locking operation.

9. Energy supply according to Claim 8,
**characterized**
**in that** the first threshold value of the state of charge of the corresponding energy store (20) is selected in such a manner that the stored energy enables a complete unlocking and locking operation of the door system (1).

10. Door system (1) having an energy supply and at least one leaf (moving leaf 3, fixed leaf 5), at least one electrical component (EK) which makes it possible to unlock and lock the at least one leaf (moving leaf 3, fixed leaf 5), wherein the energy supply door control electronics (7.1), a voltage source (7.2) which, during normal operation, supplies the at least one electrical component (EK) with an electrical voltage, and an emergency power supply (10) which comprises at least one electrical energy store (20) and, during emergency operation, supplies the at least one electrical component (EK) with the electrical voltage,
**characterized**
**in that** the energy supply is designed according to at least one of Claims 1 to 9.

11. Door system (1) according to Claim 1, **characterized**
**in that** the at least one emergency power unit (11) is integrated in the frame or panel of the at least one leaf (moving leaf 3, fixed leaf 5) and/or outside the at least one leaf (moving leaf 3, fixed leaf 5) in a door control device (7) which comprises the door control electronics (7.1) and the voltage source (7.2).

## Revendications

1. Alimentation en énergie pour une installation de porte (1), comprenant une électronique de commande de porte (7.1), une source de tension (7.2) qui, en fonctionnement normal, alimente au moins un composant électrique (EK) de l'installation de porte (1) avec une tension électrique, et une alimentation électrique de secours (10), laquelle comporte au moins un accumulateur d'énergie électrique (20) et, dans un fonctionnement de secours, alimente l'au moins un composant électrique (EK) de l'installation de porte (1) avec la tension électrique, **caractérisée en ce**
**que** l'alimentation électrique de secours (10) est de construction modulaire et comporte au moins une unité de courant de secours (11) autonome, laquelle possède, sur un circuit imprimé (12), l'au moins un accumulateur d'énergie (20) et un circuit d'interprétation et de commande (14) et est incorporée dans un trajet de courant entre la source de tension (7.2) et l'au moins un composant électrique (EK) de l'installation de porte (1), l'électronique de commande de porte (7.1) déterminant le nombre d'accumulateurs d'énergie électrique (20) et l'état de charge des accumulateurs d'énergie électrique (20) de l'alimentation électrique de secours (10) par le biais d'une communication avec l'au moins une unité de courant de secours (11).

2. Alimentation en énergie selon la revendication 1, **caractérisée en ce que** le circuit imprimé (12) est garni sur une face et disposé dans un boîtier (18).

3. Alimentation en énergie selon la revendication 1 ou 2, **caractérisée en ce que** le circuit d'interprétation et de commande (14) de l'unité de courant de secours (11) respective réalise cycliquement une surveillance de ligne de premières lignes de liaison (6), lesquelles relient l'au moins une unité de courant de secours (11) à la source de tension (7.2), et de deuxièmes lignes de liaison (9), lesquelles relient l'unité de courant de secours (11) respective à l'au moins un composant électrique (EK), et un autotest avec une surveillance de l'état de charge de l'au moins un accumulateur d'énergie (20) .

4. Alimentation en énergie selon la revendication 3, **caractérisée en ce que** le circuit d'interprétation et de commande (14) délivre un dysfonctionnement reconnu à l'électronique de commande de porte (7.1) de niveau supérieur, les dysfonctionnements reconnus pouvant être affichés par le biais d'au moins une unité de sortie visuelle.

5. Alimentation en énergie selon la revendication 3 ou 4, **caractérisée en ce que** le circuit d'interprétation et de commande (14) déclenche un fonctionnement de secours lorsque la surveillance de ligne affiche une interruption du trajet de courant vers la source de tension (7.2).

6. Alimentation en énergie selon l'une des revendications 3 à 5, **caractérisée en ce que** le circuit d'interprétation et de commande (14) exécute une opération de charge lorsque l'état de charge actuel de l'au moins un accumulateur d'énergie (20) présente ou devient inférieur à une première valeur de seuil prédéfinie, et met fin à l'opération de charge lorsque l'état de charge actuel de l'au moins un accumulateur d'énergie (20) atteint ou devient supérieur à une deuxième valeur de seuil prédéfinie.

7. Alimentation en énergie selon la revendication 6, **caractérisée en ce que** le circuit d'interprétation et de commande (14) surveille l'opération de charge et limite le courant de charge, le circuit d'interprétation et de commande (14) interprétant l'opération de charge et reconnaissant un accumulateur d'énergie (20) défectueux lorsque l'état de charge de l'accumulateur d'énergie (20) correspondant n'atteint pas la première valeur de seuil après l'écoulement d'un temps de charge prédéfini.

8. Alimentation en énergie selon l'une des revendications 1 à 7, **caractérisée en ce que** le composant électrique (EK) est un mécanisme d'entraînement de barre (5.2) pour une barre de verrouillage (5.3) d'un vantail de porte (5) ou une électronique de serrure (3.2) pour un pêne dormant, qui réalisent des opérations de déverrouillage ou de verrouillage.

9. Alimentation en énergie selon la revendication 8, **caractérisée en ce que** la première valeur de seuil de l'état de charge de l'accumulateur d'énergie (20) correspondant est choisie de telle sorte que l'énergie accumulée rend possible une opération de déverrouillage ou de verrouillage complète de l'installation de porte (1) .

10. Installation de porte (1) comprenant une alimentation en énergie et au moins un vantail (vantail mobile 3, vantail fixe 5), au moins un composant électrique (EK), lequel rend possible un déverrouillage et un verrouillage de l'au moins un vantail (vantail mobile 3, vantail fixe 5), l'alimentation en énergie une électronique de commande de porte (7.1), une source de tension (7.2) qui, en fonctionnement normal, alimente l'au moins un composant électrique (EK) avec une tension électrique, et une alimentation électrique de secours (10), laquelle comporte au moins un accumulateur d'énergie électrique (20) et, dans un fonctionnement de secours, alimente l'au moins un composant électrique (EK) avec la tension électrique,
**caractérisée en ce**
**que** l'alimentation en énergie est réalisée selon au moins l'une des revendications 1 à 9.

11. Installation de porte (1) selon la revendication 1, **caractérisée en ce que** l'au moins une unité de courant de secours (11) est intégrée dans le cadre ou le panneau de l'au moins un vantail (vantail mobile 3, vantail fixe 5) et/ou à l'extérieur de l'au moins un vantail (vantail mobile 3, vantail fixe 5) dans un contrôleur de porte (7), lequel comporte l'électronique de commande de porte (7.1) et la source de tension (7.2).
